# FASCICULE DE BREVET EUROPEEN

(11) **EP 2 604 426 B1**
(45) Date de publication et mention de la délivrance du brevet: **11.03.2015**
(21) Numéro de dépôt: 12306541.9
(22) Date de dépôt: 07.12.2012
(51) Int. Cl.: B32B 3/30, F02C 7/045, G01K 3/00, G10K 11/168, B32B 38/06

(54) **Procédé de réalisation d'un panneau pour le traitement acoustique**
Fertigungsverfahren für eine Lärmschutzwand
Manufacturing method for a sound attenuating panel

(30) Priorité: 13.12.2011 FR 1161513
(43) Date de publication de la demande: 19.06.2013
(73) Titulaire: Airbus Opérations SAS, 31060 Toulouse (FR)
(72) Inventeur: Porte, Alain, 31770 Colomiers (FR); Casse, Nicolas, 31000 Toulouse (FR); Albet, Grégory, 31190 Grepiac (FR)
(74) Mandataire: Fantin, Laurent

(56) Documents cités:
- EP-A2- 2 026 325
- WO-A1-98/06564
- DE-A1- 19 952 689
- US-A- 3 011 602

## Description

La présente invention se rapporte à un procédé de réalisation d'un panneau pour le traitement acoustique ainsi qu'à un panneau ainsi obtenu, ledit panneau étant plus particulièrement adapté pour intégrer la fonction du traitement du givre.

L'arrière-plan technologique est par exemple illustré dans le document DE-A-199 52 689.

Un ensemble propulsif d'aéronef comprend une nacelle dans laquelle est disposée de manière sensiblement concentrique une motorisation.

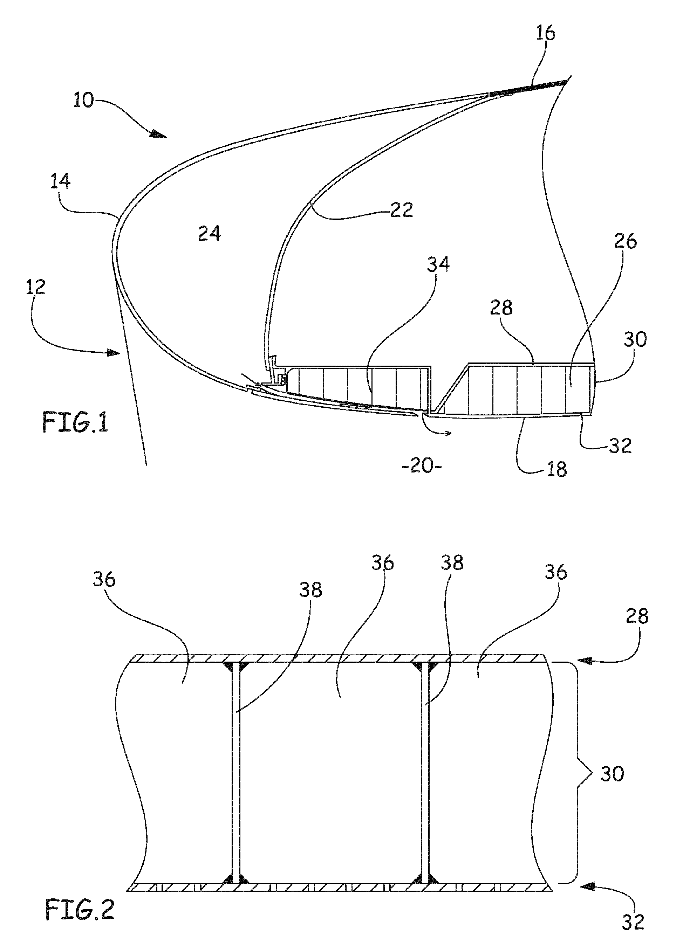

Comme illustré sur la figure 1, une nacelle 10 comprend à l'avant une entrée d'air 12 permettant de canaliser un flux d'air en direction de la motorisation.

Selon une coupe longitudinale (contenant l'axe de rotation de la motorisation), une entrée d'air 12 comprend une lèvre 14 prolongée à l'extérieur de la nacelle par une paroi extérieure 16 et à l'intérieur par la paroi intérieure 18 définissant un conduit intérieur 20 permettant de canaliser l'air en direction de la motorisation.

La nacelle comprend également un cadre avant 22 qui délimite avec la lèvre 14 un conduit annulaire 24 qui peut être utilisé pour canaliser de l'air chaud pour le traitement du givre.

Pour limiter l'impact des nuisances sonores, des techniques ont été développées pour réduire le bruit interne, notamment en disposant, au niveau des parois du conduit intérieur 20, des panneaux ou revêtements visant à absorber une partie de l'énergie sonore, notamment en utilisant le principe des résonateurs d'Helmholtz.

Pour optimiser le traitement acoustique, ces panneaux doivent recouvrir la plus grande surface. Certains panneaux 26 pour le traitement acoustique peuvent recouvrir le conduit intérieur 20, ces derniers distants du cadre avant ne comportant pas la fonction du traitement du givre. Dans ce cas, un panneau acoustique comprend de l'extérieur vers l'intérieur une couche acoustiquement résistive 28, au moins une structure alvéolaire 30 et une couche réflectrice 32. D'autres panneaux peuvent être disposés dans le conduit annulaire 24 à l'avant du cadre 22 et combiner les fonctions du traitement acoustique et du traitement du givre. Enfin, un panneau 34 pour le traitement acoustique avec des matériaux résistants à la chaleur peut être intercalé entre le cadre avant 22 et les panneaux 26. Ce panneau 34 intègre également la fonction du traitement du givre et comprend des moyens pour capter l'air chaud dans le conduit annulaire 24 et le rejeter à l'arrière dans le conduit intérieur 20.

Un tel panneau combinant les fonctions du traitement acoustique et du traitement du givre est notamment décrit dans le brevet FR-2.917.067. Il comprend de l'extérieur vers l'intérieur une couche acoustiquement résistive, au moins une structure alvéolaire et une couche réflectrice, ainsi que des canaux délimités chacun par une paroi intercalée entre la couche acoustiquement résistive et la structure alvéolaire.

Cette solution permet de limiter les risques de communication entre l'intérieur des canaux et les cellules de la structure alvéolaire, et donc les risques de perturbation du traitement acoustique.

Dans tous les cas, comme illustré sur la figure 2, la structure alvéolaire 30 comprend des conduits 36 orientés perpendiculairement aux couches réflectrice et acoustiquement résistive dont les deux extrémités débouchantes sont obturées l'une par la couche acoustiquement résistive et l'autre par la couche réflectrice.

Selon un mode de réalisation, la structure alvéolaire comprend des cloisons 38 orientées perpendiculairement aux couches réflectrice et acoustiquement résistive, définissant un nid d'abeilles.

Selon un autre mode de réalisation, la structure alvéolaire comprend des bandes orientées perpendiculairement aux couches réflectrice et acoustiquement résistive qui s'entrecroisent comme illustré dans le document FR-2.912.780. Pour que le panneau acoustique soit performant, il est nécessaire que les cellules ne puissent pas communiquer entre elles afin d'éviter qu'il ne se crée à l'intérieur du panneau pour le traitement acoustique un flux d'air depuis un premier point jusqu'à un second point distant susceptible de perturber le flux d'air canalisé par l'entrée d'air et le conduit intérieur 20.

Par conséquent, les bords périphériques des extrémités de chaque conduit 36 de la structure alvéolaire doivent être en contact avec la couche réflectrice ou acoustiquement résistive et reliés de manière sensiblement étanche avec lesdites couches.

Dans le cas d'un panneau pour le traitement acoustique en matériau composite, cette liaison entre les bords périphériques des extrémités des conduits de la structure alvéolaire et l'une des deux couches réflectrice ou acoustiquement résistive est réalisée par collage.

Dans le cas d'un panneau pour le traitement acoustique métallique, cette liaison est réalisée par soudage ou par brasage. Cette opération est délicate à réaliser.

Selon une autre problématique, les panneaux pour le traitement acoustique sont généralement réalisés à plat et sont mis en forme pour s'adapter aux formes du conduit intérieur 20 ou de l'entrée d'air. Lors de cette mise en forme, compte tenu de la rigidité de la structure alvéolaire, les liaisons entre les bords périphériques des extrémités des conduits de la structure alvéolaire et les deux couches réflectrice ou acoustiquement résistive sont soumises à des contraintes susceptibles de les endommager.

Les risques de fuites entre les cellules sont d'autant plus importants qu'ils sont présents au niveau de la liaison de la structure alvéolaire et de la couche acoustiquement résistive mais également au niveau de la liaison entre la structure alvéolaire et la couche acoustiquement résistive.

Aussi, la présente invention vise à pallier aux inconvénients de l'art antérieur en proposant un procédé de réalisation d'un panneau pour le traitement acoustique permettant de limiter les risques de fuites entre les cellules susceptibles de perturber le fonctionnement dudit panneau.

A cet effet, l'invention a pour objet un procédé de réalisation d'un panneau pour le traitement acoustique, **caractérisé en ce qu'il** comprend les étapes consistant à:
- assembler deux plaques dont au moins une est déformée de manière à écarter les plaques de façon localisée afin de former entre les deux plaques des cavités d'une structure alvéolaire, lesdites cavités étant délimitées par des facettes et des cloisons formées par au moins une des plaques déformées,
- réaliser au moins un orifice sur des facettes d'une des deux plaques, et
- plaquer une couche acoustiquement résistive contre la face de la structure alvéolaire comportant les orifices.

D'autres caractéristiques et avantages ressortiront de la description qui va suivre de l'invention, description donnée à titre d'exemple uniquement, en regard des dessins annexés sur lesquels :
- la figure 1 est une coupe longitudinale d'une partie d'une entrée d'air selon l'art antérieur,
- la figure 2 est une coupe illustrant en détails un panneau pour le traitement acoustique selon l'art antérieur,
- la figure 3A est une représentation schématique d'une plaque et d'une matrice pour obtenir une demi-structure alvéolaire selon une variante de l'invention,
- la figure 3B est une vue en perspective d'une partie d'une demi-structure alvéolaire selon une variante de l'invention,
- la figure 4 est une coupe d'une structure alvéolaire selon une variante de l'invention,
- la figure 5 est une vue en perspective de la structure alvéolaire de la figure 4,
- la figure 6 est une vue en perspective de la structure alvéolaire de la figure 5 après la réalisation d'orifices pour les cellules,
- la figure 7 est une coupe d'un panneau pour le traitement acoustique selon l'invention, sensiblement plat, incorporant la structure alvéolaire de la figure 6,
- la figure 8 est une coupe d'un panneau pour le traitement acoustique selon l'invention, courbe,
- la figure 9A est une coupe d'un panneau pour le traitement acoustique incorporant la fonction du traitement du givre selon une première variante de l'invention,
- la figure 9B est une vue en perspective d'une matrice permettant d'obtenir une demi-structure alvéolaire utilisée pour délimiter des canaux d'air chaud,
- la figure 10 est une coupe d'un panneau pour le traitement acoustique incorporant la fonction du traitement du givre selon une autre variante de l'invention,
- la figure 11 est une vue en perspective d'une plaque délimitant des canaux incorporée dans le panneau de la figure 10,
- la figure 12 est une vue de dessus d'une plaque assemblée à une autre plaque préalablement à leurs déformations permettant d'obtenir une structure alvéolaire selon une variante de l'invention,
- la figure 13 est une coupe d'une structure alvéolaire obtenue à partir des plaques illustrées sur la figure 12 déformées,
- la figure 14 est une coupe d'un panneau pour le traitement acoustique obtenu à partir de la structure alvéolaire de la figure 13, et
- la figure 15 est une coupe d'une autre variante d'une structure alvéolaire selon l'invention.

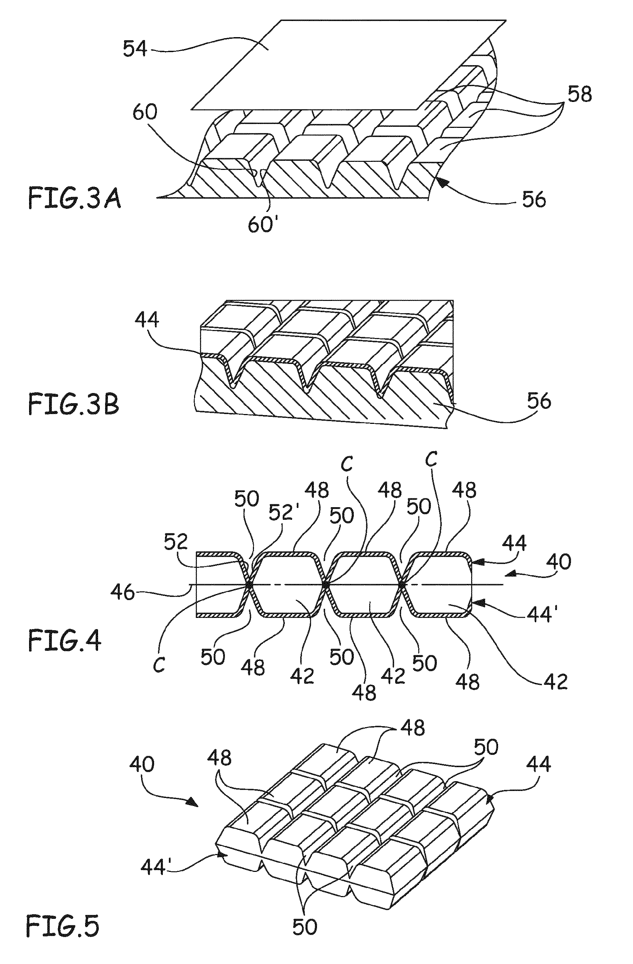

Sur les figures 4 et 5, on a représenté une structure alvéolaire 40 avec des cellules 42 cloisonnées.

Selon un mode de réalisation de l'invention, une structure alvéolaire 40 est obtenue à partir de deux demi-structures alvéolaires 44, 44' assemblées au niveau d'un plan de jonction 46.

Chaque demi-structure alvéolaire 44 ou 44' comprend un ensemble de facettes 48 coplanaires séparées par un réseau de gorges 50 dont les flancs 52, 52' assurent la fonction pour chacune d'elles d'une partie de la cloison séparant deux cellules 42 de la structure alvéolaire.

Les gorges 50 d'une même demi-structure ont toutes la même profondeur de manière à ce que les extrémités inférieures des gorges soient coplanaires. Ainsi, si on oriente la plaque de telle manière que les gorges soient ouvertes vers le bas, les crêtes C sont coplanaires et délimitent entre elles des formes en creux qui correspondent chacune à une partie d'une cellule 42.

Selon un mode de réalisation, les gorges 50 sont orientées selon au moins deux directions sécantes.

De préférence, les gorges 50 sont orientées selon deux directions perpendiculaires.

Pour former une structure alvéolaire, il convient d'assembler deux demi-structures alvéolaires 44 et 44' qui ont des réseaux de gorges 50 identiques de manière à ce que les crêtes C définissent le même maillage d'une demi-structure alvéolaire à l'autre et à ce que les crêtes C de la demi structure alvéolaire 44 soient jointives avec les crêtes C de la demi-structure alvéolaire 44' afin d'isoler les cellules 42 entre elles.

Selon une variante, le plan de jonction 46 est médian et les gorges 50 des deux demi-structures ont la même profondeur.

Selon d'autres variantes, le plan de jonction peut ne pas être médian, les gorges d'une demi-structure étant plus profondes que celles de l'autre demi-structure.

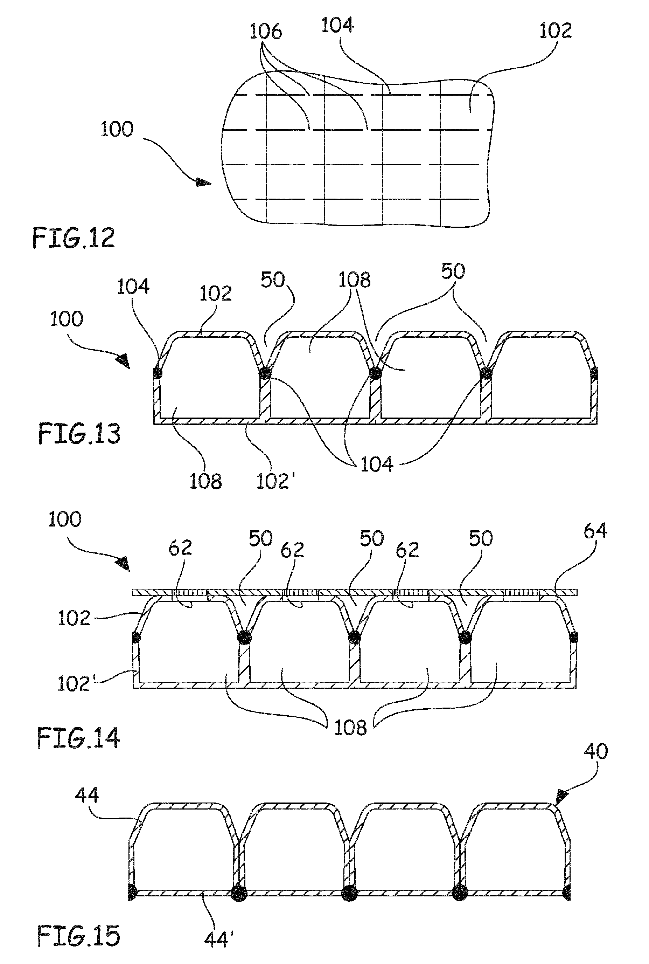

A l'extrême, une demi-structure 44' peut se présenter sous la forme d'une plaque plane, comme illustré sur la figure 15. Dans ce cas, seulement une demi-structure 44 est déformée et le plan de jonction 46 est prévu au niveau de la demi-structure plane 44'.

Selon un mode de réalisation préféré, les demi-structures alvéolaires 44 et 44' sont réalisées chacune à partir d'une plaque 54 plane métallique (visible sur la figure 3A), en alliage de titane par exemple. Cette plaque 54 est mise en forme par formage superplastique en utilisant une matrice 56 illustrée sur la figure 3A. Cette matrice 56 comprend un réseau de gorges délimitant entre elles des éléments en saillie 58 dont les formes sont conformes à celles des formes en creux des demi-structures alvéolaires. Chaque gorge de la matrice 56 est délimitée par deux flancs 60, 60'. De préférence, les flancs forment un angle non nul supérieur à 5° et inférieur à 20°.

Sur la figure 3B, on a représenté la plaque 54 déformée sur la matrice 56.

L'invention n'est pas limitée aux matériaux indiqués. Ainsi, les demi-structures alvéolaires pourraient être réalisées en matériau composite. De la même manière la mise en forme des plaques peut être réalisée par d'autres techniques que le formage superplastique.

Pour assembler les deux demi-structures alvéolaires, leurs crêtes C sont plaquées les unes contre les autres et assemblées par une technique de soudage, notamment par ultrasons.

En variante, l'assemblage est réalisé grâce à une technique de soudage par diffusion.

A cet effet, au moins les crêtes C des demi-structures alvéolaires sont portées à une température supérieure à un seuil donné. De manière concomitante, on exerce une pression tendant à plaquer les crêtes C les unes contre les autres. La combinaison des élévations de température et de pression conduit à obtenir une soudure continue au niveau des crêtes C qui est parfaitement étanche.

La température seuil et la pression minimale dépendent des matériaux utilisés et plus particulièrement de leurs caractéristiques rhéologiques relatives à la superplasticité. A titre d'exemple, pour des demi-structures alvéolaires à base d'alliage de titane, la température doit atteindre au niveau des crêtes 900°C. Après assemblage, la structure alvéolaire 40 se présente sous la forme d'un volume délimité par deux surfaces imaginaires, la première surface imaginaire comprenant l'ensemble des facettes 48 d'une première demi-structure alvéolaire 44, l'autre surface imaginaire comprenant l'ensemble des facettes 48 de la seconde demi-structure alvéolaire 44', comme illustré sur la figure 5.

Sur les figures 12 à 14, on a représenté un autre mode de réalisation d'une structure alvéolaire 100. Elle comprend deux plaques planes 102, 102' qui sont assemblées selon un réseau de lignes de jonction 104. Ce réseau de lignes de jonction est identique au réseau de cloisons de la structure alvéolaire 100 que l'on souhaite obtenir. Selon l'exemple illustré sur la figure 12, le réseau de lignes de jonction 104 comprend deux séries de lignes de jonction sensiblement rectilignes, les lignes de jonction de la première série étant parallèles entre elles et perpendiculaires aux lignes de jonction de la seconde série. Après déformation, ce type de réseau permet d'obtenir des cellules carrées ou rectangulaires.

Selon un mode de réalisation, le réseau de lignes de jonction est réalisé grâce à une technique de soudage par diffusion.

Selon un point important de cette variante, certaines lignes de jonction comprennent des discontinuités 106 de manière à pouvoir faire communiquer toutes les zones 108 délimitées par le réseau de lignes de jonction avec une source d'un fluide sous pression.

Après assemblage, au moins l'une des deux plaques est déformée, de manière à obtenir une structure analogue à celle illustrée sur la figure 15. De préférence, les deux plaques 102, 102' sont déformées, comme illustré sur la figure 13. Selon un mode de réalisation, les deux plaques 102, 102' sont métalliques, en alliage de titane par exemple. Elles sont mises en forme par formage superplastique en utilisant deux matrices disposées de part et d'autre des deux plaques et en injectant un fluide sous pression entre les deux plaques. L'une des deux matrices peut être analogue à la matrice 56 et comprendre un réseau de gorges de manière à obtenir au niveau d'une des plaques notamment la plaque 102, un réseau de gorge 50.

Lors de la déformation, certaines zones des plaques s'écartent de manière à obtenir des cellules, comme illustré sur la figure 13. Selon cette variante, l'une des matrices en regard de la plaque 102' est sensiblement plane alors que la matrice en regard de la plaque 102 est analogue à la matrice 56.

Après déformation, les plaques 102, 102' forment des demi-structures alvéolaires et les discontinuités prévues au niveau du réseau de lignes de jonction sont obturées de manière à obtenir des cellules étanches entre elles. Cette opération peut être obtenue grâce à un soudage par diffusion.

Quel que soit le mode de réalisation, la structure alvéolaire est obtenue par l'assemblage de deux plaques qui sont déformées avant ou après être assemblées. Après déformation, les plaques comprennent chacune une pluralité de facettes 48, les facettes d'une première plaque étant disposées en face des facettes de la seconde plaque. Certaines portions d'au moins une plaque forment après déformation les cloisons qui séparent les cellules de la structure alvéolaire les unes des autres. Pour assurer l'étanchéité entre les cellules, les deux plaques sont soudées selon un réseau de lignes de jonction qui correspond au réseau des cloisons des cellules de la structure alvéolaire.

Pour pouvoir être utilisée comme structure alvéolaire d'un panneau pour le traitement acoustique, la structure alvéolaire 40 comprend au niveau d'au moins une facette 48 d'une seule demi-structure alvéolaire 44 au moins un orifice 62. Généralement toutes les facettes 48 d'une seule demi-structure alvéolaire 44 comprennent au moins un orifice 62. Les facettes 48 de l'autre demi-structure alvéolaire 44' ne comprennent aucun orifice et assurent la fonction de couche réflectrice. Dans le cas de la structure alvéolaire 100, les orifices 62 sont réalisés au niveau des facettes d'une seule plaque, en l'occurrence la plaque 102 comme illustré sur la figure 14.

Les orifices 62 peuvent avoir des sections différentes. Ainsi chaque facette 48 peut comprendre une multitude de microperforations. De préférence, chaque facette 48 comprend un orifice 62.

Les orifices 62 sont réalisés avant ou après l'assemblage des deux demi-structures 44 et 44' ou des deux plaques 102 et 102'.

Selon un mode de réalisation, les orifices 62 sont obtenus par détourage. Avantageusement, les orifices 62 doivent avoir une section maximale. Ainsi, de préférence, pour chaque cellule, l'orifice 62 correspond à plus de 80% de la superficie des facettes 48.

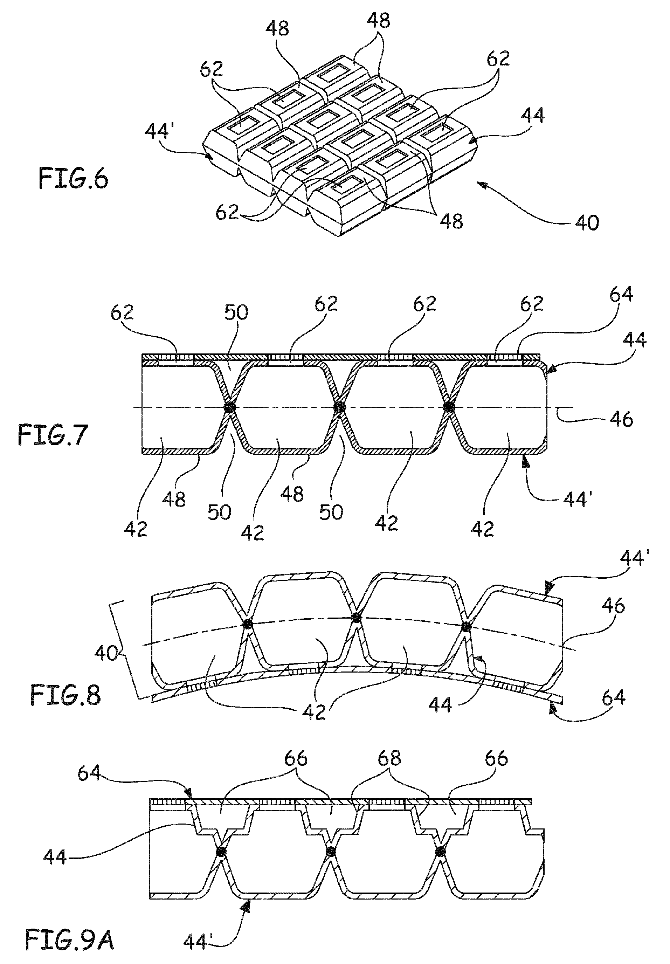

Ainsi, comme illustré sur la figure 6, la structure alvéolaire 40 se présente sous la forme d'un volume délimité par deux surfaces imaginaires, la première surface imaginaire comprenant l'ensemble des facettes 48 avec les orifices 62 de la demi-structure alvéolaire 44, l'autre surface imaginaire comprenant l'ensemble des facettes 48 sans orifice de la demi-structure alvéolaire 44'.

Pour obtenir un panneau pour le traitement acoustique, une couche acoustiquement résistive 64 est plaquée contre la face de la structure alvéolaire 40 ou 100 comprenant les facettes 48 avec les orifices 62.

La couche acoustiquement résistive 64 est une structure poreuse ayant un rôle dissipatif, transformant partiellement l'énergie acoustique de l'onde sonore la traversant en chaleur. Cette couche acoustiquement résistive se caractérise notamment par un taux de surface ouverte qui varie essentiellement en fonction du moteur, des composants constituant ladite couche.

Selon un mode de réalisation, la couche acoustiquement résistive 64 se présente sous la forme d'au moins une couche de fibres tissées ou non tissées, les fibres étant de préférence enrobées d'une résine pour assurer la reprise des efforts dans les directions différentes des fibres.

Selon un autre mode de réalisation, la structure acoustiquement résistive 64 comprend au moins une couche poreuse sous la forme par exemple d'un tissu métallique ou non tel qu'un grillage métallique et au moins une couche structurale par exemple une tôle métallique ou composite avec des trous oblongs ou des microperforations.

Selon un autre mode de réalisation, la couche acoustiquement résistive se présente sous la forme d'une tôle métallique avec des perforations ou des microperforations.

L'assemblage de la structure alvéolaire 40 ou 100 et de la couche acoustiquement résistive 64 peut être réalisé par tout moyen approprié, notamment grâce à une technique de soudage par diffusion.

Les avantages procurés par le mode de réalisation de l'invention sont les suivants :

Les facettes d'une demi-structure alvéolaire ou plaque assurent la fonction de couche réflectrice. Ainsi, il est possible de supprimer la couche réflectrice et de la sorte les risques de fuites au niveau des liaisons entre les cloisons de la structure alvéolaire et de la couche réflectrice.

Les gorges de la structure alvéolaire confèrent à ces dernières une certaine souplesse, comme illustré sur la figure 8. Ainsi, il est plus facile de mettre en forme la structure alvéolaire afin d'adapter sa forme à celle du conduit ou de l'entrée d'air.

En effet, les flancs 52, 52' des gorges orientés perpendiculairement à la tangente au rayon de courbure de la demi-structure alvéolaire 44 avec les orifices sont plaqués les uns contre les autres alors que les flancs 52, 52' des gorges orientés perpendiculairement à la tangente au rayon de courbure de la demi-structure alvéolaire 44' sans les orifices sont écartés.

Avantageusement, la mise en forme de la structure alvéolaire 40 est réalisée avant l'assemblage avec la couche acoustiquement résistive 64. Après l'assemblage, cette dernière assure le maintien de la structure alvéolaire dans cette position courbe.

Lorsque le plan de jonction 46 est médian, les risques d'endommagement de la liaison entre les deux demi-structures alvéolaires 44 et 44' sont limités car la liaison est disposée sensiblement au niveau de la « fibre neutre » qui subit des contraintes limitées en raison de la déformation courbe de la structure alvéolaire.

Le panneau pour le traitement acoustique selon l'invention est plus particulièrement adapté pour intégrer la fonction du traitement du givre et comprend à cet effet des canaux 66 intercalés entre la structure alvéolaire 40 et la couche acoustiquement résistive 64.

Selon un premier mode de réalisation illustré sur la figure 9A, les canaux 66 sont délimités par la couche acoustiquement résistive 64 et la demi-structure alvéolaire 44. De préférence, les gorges 68 selon une première direction sont utilisées pour délimiter les canaux d'air chaud. A titre d'exemple, toutes les gorges 68 selon une première direction sont toutes utilisées pour délimiter les canaux d'air chaud. En variante, seulement certaines gorges 68 sont utilisées pour délimiter les canaux d'air chaud.

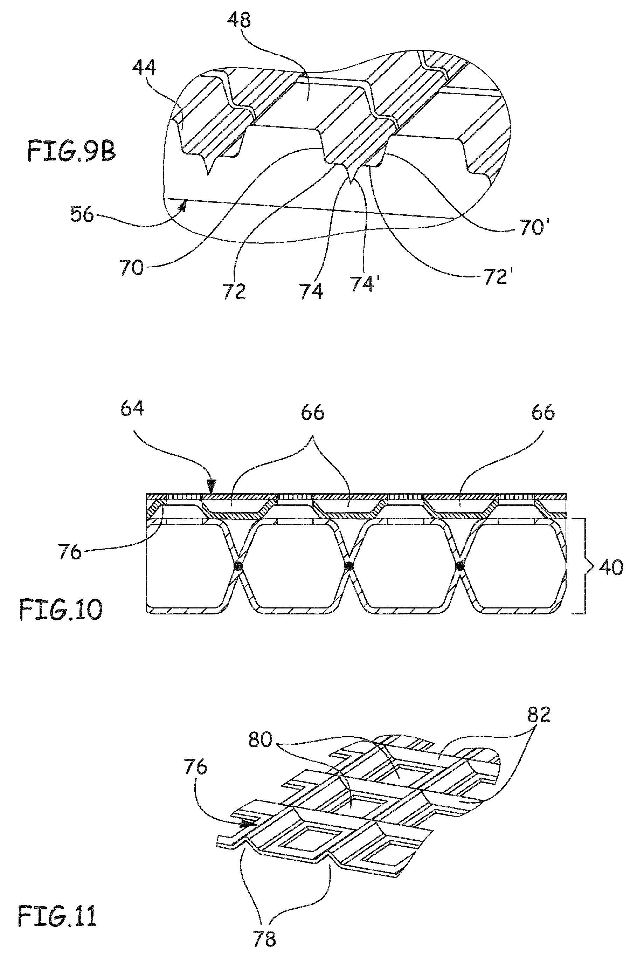

Selon une autre variante, certaines ou toutes les gorges orientées selon les deux directions sont utilisées pour délimiter les canaux d'air chaud. Avantageusement, une gorge 68 utilisée pour canaliser de l'air chaud comprend une forme évasée. Ainsi, comme illustré sur les figures 9A et 9B, une gorge 68 de la demi-structure ou la gorge correspondante de la matrice 56 comprend une section délimitée par deux flancs comprenant respectivement une première partie supérieure 70, 70' (reliée aux facettes 48), une partie intermédiaire 72, 72' sensiblement horizontale (correspondant au fond d'un canal d'air chaud) et une partie inférieure 74, 74' (la plus éloignée des facettes 48). Les parties 74, 74' sont faiblement espacées voire plaquées l'une contre l'autre alors que les parties supérieures 70 et 70' sont espacées pour favoriser l'écoulement de l'air et délimitent avec les parties intermédiaires 72, 72' une section en U.

Selon un autre mode de réalisation illustré sur les figures 10 et 11, les canaux d'air chaud sont délimités par la couche acoustiquement résistive 64 et une plaque 76 intercalée entre ladite couche acoustiquement résistive et une structure alvéolaire telle qu'illustrée sur les figures 7 ou 8.

La plaque 76 est mise en forme avec des sillons 78 de manière à délimiter une fois plaquée contre la couche acoustiquement résistive 64 les canaux 66. Selon un mode de réalisation, la plaque 76 est mise en forme par formage superplastique. Toutefois, d'autres techniques de mise en forme pourraient être envisagées.

Après assemblage, la couche acoustiquement résistive 64 et la plaque 76 sont perforées ou microperforées de manière à permettre aux ondes acoustiques de les traverser afin d'atteindre les cellules 42.

En variante, la plaque 76 peut comprendre des évidements 80 au droit des zones ouvertes de la couche acoustiquement résistive 64 pour permettre aux ondes acoustiques d'atteindre les cellules 42 comme illustré sur la figure 11.

Dans les deux cas, des cloisons 82 orientées perpendiculairement aux canaux 66 sont prévues au niveau de la face de la plaque 76 orientées vers la structure alvéolaire de manière à limiter l'écoulement de l'air entre deux cellules 42.

## Revendications

1. Procédé de réalisation d'un panneau pour le traitement acoustique, **caractérisé en ce qu'il** comprend les étapes consistant à :
- assembler deux plaques (54, 102, 102') dont au moins une est déformée de manière à écarter les plaques de façon localisée afin de former entre les deux plaques des cavités d'une structure alvéolaire, lesdites cavités étant délimitées par des facettes (48) et des cloisons formées par au moins une des plaques déformées,
- réaliser au moins un orifice (62) sur les facettes (48) d'une des deux plaques (54, 102, 102'), et
- à plaquer une couche acoustiquement résistive (64) contre la face de la structure alvéolaire (40) comportant les orifices (62).

2. Procédé de réalisation d'un panneau pour le traitement acoustique selon la revendication 1, **caractérisé en ce qu'il** consiste à déformer la plaque en contact avec la couche acoustiquement résistive (64) de manière à former des gorges (68) avec une forme évasée pour délimiter avec ladite couche acoustiquement résistive (64) des canaux (66) aptes à canaliser de l'air chaud pour le traitement du givre.

3. Procédé de réalisation d'un panneau pour le traitement acoustique selon la revendication 1 ou 2, **caractérisé en ce qu'il** comprend les étapes consistant à :
- mettre en forme deux plaques (54) de manière à obtenir deux demi-structures alvéolaires (44, 44') avec chacune un ensemble de facettes (48) coplanaires séparées par un réseau de gorges (50), les deux demi-structures alvéolaires (44, 44') ayant des réseaux de gorges (50) identiques, et
- assembler les deux demi-structures alvéolaires en plaquant les extrémités des gorges des deux demi-structures (44, 44') les unes contre les autres.

4. Procédé de réalisation d'un panneau pour le traitement acoustique selon la revendication 1 ou 2, **caractérisé en ce qu'il** consiste à assembler deux plaques selon un réseau de lignes de jonction puis à déformer les deux plaques entre deux matrices en injectant entre les deux plaques un fluide sous pression.

5. Procédé de réalisation d'un panneau pour le traitement acoustique selon la revendication 3 ou 4, **caractérisé en ce que** les plaques (54) sont mises en forme par formage superplastique en utilisant une matrice (56) avec un réseau de gorges.

6. Procédé de réalisation d'un panneau pour le traitement acoustique selon la revendication 3 ou 4, **caractérisé en ce que** les plaques sont assemblées par soudage par diffusion.

7. Procédé de réalisation d'un panneau pour le traitement acoustique selon l'une quelconque des revendications précédentes, **caractérisé en ce qu'il** consiste à intercaler entre la structure alvéolaire (40) et la couche acoustiquement résistive (64) une plaque (76) avec des sillons (78) de manière à délimiter une fois plaquée contre la couche acoustiquement résistive (64) des canaux (66) aptes à canaliser de l'air chaud pour le traitement du givre.

8. Procédé de réalisation d'un panneau pour le traitement acoustique selon l'une quelconque des revendications précédentes, **caractérisé en ce que** les deux plaques déformées sont assemblées au niveau d'un plan de jonction qui correspond au plan médian de ladite structure alvéolaire.

9. Panneau pour le traitement acoustique obtenu à partir du procédé selon l'une quelconque des revendications précédentes, **caractérisé en ce qu'il** comprend d'une part une structure alvéolaire comportant deux plaques (54, 102, 102') dont au moins une est déformée de manière à ce que lesdites plaques soient écartées de façon localisée afin de former entre les deux plaques des cavités, lesdites cavités étant délimitées par des facettes (48) et des cloisons produites par au moins une des plaques déformées, les facettes d'une des deux plaques comprenant au moins un orifice (62), et d'autre part, une couche acoustiquement résistive (64) plaquée contre la face de la structure alvéolaire (40) avec les orifices (62).

10. Panneau pour le traitement acoustique selon la revendication 9, **caractérisé en ce que** le plan de jonction (46) des deux plaques est médian.

11. Panneau pour le traitement acoustique selon la revendication 9 ou 10, **caractérisé en ce qu'il** comprend des canaux (66) pour canaliser de l'air chaud pour le traitement du givre.

12. Panneau pour le traitement acoustique selon la revendication 11, **caractérisé en ce que** certaines gorges (68) de la plaque déformée en contact avec la couche acoustiquement résistive (64) ont une forme évasée pour délimiter avec ladite couche acoustiquement résistive des canaux (66) aptes à canaliser de l'air chaud pour le traitement du givre.

13. Panneau pour le traitement acoustique selon l'une quelconque des revendications 9 à 11, **caractérisé en ce qu'il** comprend, intercalée entre la structure alvéolaire (40) et la couche acoustiquement résistive (64), une plaque (76) avec des sillons (78) de manière à délimiter une fois plaquée contre la couche acoustiquement résistive (64) des canaux (66) aptes à canaliser de l'air chaud pour le traitement du givre.

## Patentansprüche

1. Verfahren zur Herstellung einer Wand für die Schallbehandlung, **dadurch gekennzeichnet, dass** dieses folgende Verfahrensschritte umfasst:
- Zusammenfügen von zwei Platten (54, 102, 102'), von denen wenigstens eine derart ausgebildet ist, dass die Platten lokal auf Abstand gehalten werden, so dass zwischen den beiden Platten Hohlräume mit einer Wabenstruktur ausgebildet sind, wobei die Hohlräume durch Stirnflächen (48) und durch Trennwände begrenzt sind, die von wenigstens einer der geformten Platten gebildet sind,
- Ausbilden von wenigstens einer Öffnung (62) auf den Stirnflächen (48) einer der beiden Platten (54, 102, 102'), und
- Anbringen einer schalldämmenden Schicht (64) an der Stirnseite der Öffnungen (62) aufweisenden Wabenstruktur (40).

2. Verfahren zur Herstellung einer Wand für die Schallbehandlung nach Anspruch 1, **dadurch gekennzeichnet, dass** dieses darin besteht, die in Kontakt mit der schalldämmenden Schicht (64) stehende Platte derart zu formen, dass Vertiefungen (68) von einer erweiterten Form gebildet werden, um mit der schalldämmenden Schicht (64) Kanäle (66) zu begrenzen, die dazu geeignet sind, warme Luft für die Eisbehandlung zu kanalisieren.

3. Verfahren zur Herstellung einer Wand für die Schallbehandlung nach Anspruch 1 oder 2, **dadurch gekennzeichnet, dass** dieses die folgenden Verfahrensschritte umfasst:
- Formen zweier Platten (54), um zwei wabenförmige Halbstrukturen (44, 44') mit jeweils einer Anordnung von koplanaren Stirnflächen (48) zu erhalten, die durch ein Netz von Vertiefungen (50) getrennt sind, wobei die beiden wabenförmigen Halbstrukturen (44, 44') identische Netze von Vertiefungen (50) aufweisen, und
- Zusammenfügen der zwei wabenförmigen Halbstrukturen, indem die Enden der Vertiefungen der beiden Halbstrukturen (44, 44') an einander angebracht werden.

4. Verfahren zur Herstellung einer Wand für die Schallbehandlung nach Anspruch 1 oder 2, **dadurch gekennzeichnet, dass** dieses darin besteht, zwei Platten entlang einem Netz von Verbindungslinien zusammenzufügen und dann die beiden Platten zwischen zwei Matrizen zu verformen, indem ein Fluid unter Druck zwischen die zwei Platten injiziert wird.

5. Verfahren zur Herstellung einer Wand für die Schallbehandlung nach Anspruch 3 oder 4, **dadurch gekennzeichnet, dass** die Platten (54) durch eine superelastische Verformung in Form gebracht werden, indem eine Matrix (56) mit einem Netz von Vertiefungen verwendet wird.

6. Verfahren zur Herstellung einer Wand für die Schallbehandlung nach Anspruch 3 oder 4, **dadurch gekennzeichnet, dass** die Platten durch Diffusionsschweißen zusammengefügt werden.

7. Verfahren zur Herstellung einer Wand für die Schallbehandlung nach einem der vorhergehenden Ansprüche, **dadurch gekennzeichnet, dass** dieses darin besteht, zwischen der Wabenstruktur (40) und der schalldämmenden Schicht (64) eine Platte (76) mit Rillen (78) einzubringen, um nach dem Anbringen der schalldämmenden Schicht (64) die zum Kanalisieren von warmer Luft für die Eisbehandlung geeigneten Kanäle (66) zu begrenzen.

8. Verfahren zur Herstellung einer Wand für die Schallbehandlung nach einem der vorherigen Ansprüche, **dadurch gekennzeichnet, dass** die geformten Platten im Bereich einer Verbindungsebene zusammengefügt werden, die einer mittleren Ebene der Wabenstruktur entspricht.

9. Wand für die Schallbehandlung, hergestellt nach einem der vorhergehenden Ansprüche, **dadurch gekennzeichnet, dass** diese einerseits eine Wabenstruktur mit zwei Platten (54, 102, 102') aufweist, von denen wenigstens eine derart geformt ist, dass die Platten lokal auf Abstand gehalten sind, um zwischen den beiden Platten Hohlräume auszubilden, wobei die Hohlräume von Stirnflächen (48) und von Trennwänden begrenzt sind, die von wenigstens einer geformten Platte gebildet sind, und wobei die Stirnflächen einer der beiden Platten mit wenigstens einer Öffnung (62) versehen sind, und dass diese andererseits eine schalldämmenden Schicht (64) aufweist, die an der mit den Öffnungen (62) versehenen Außenseite der Wabenstruktur (40) angebracht ist.

10. Wand für die Schallbehandlung nach Anspruch 9,
**dadurch gekennzeichnet, dass** sich die Verbindungsebene (46) der beiden Platten in der Mitte befindet.

11. Wand für die Schallbehandlung nach Anspruch 9 oder 10, **dadurch gekennzeichnet, dass** diese Kanäle (66) aufweist, um Warmluft für die Eisbehandlung zu kanalisieren.

12. Wand für die Schallbehandlung nach Anspruch 11,
**dadurch gekennzeichnet, dass** bestimmte Vertiefungen (68) der in Kontakt mit der schalldämmenden Schicht (64) stehenden geformten Platte eine erweiterte Form aufweisen, um mit der schalldämmenden Schicht Kanäle (66) zu begrenzen, die dazu geeignet sind, Warmluft für die Eisbehandlung zu kanalisieren.

13. Wand für die Schallbehandlung nach einem der Ansprüche 9 bis 11, **dadurch gekennzeichnet, dass** diese eine zwischen der Wabenstruktur (40) und der schalldämmenden Schicht (64) eingebrachte Platte (76) mit Rillen (78) aufweist, um nach dem Anbringen an der schalldämmenden Schicht (64) Kanäle (66) zu begrenzen, die zum Kanalisieren von warmer Luft für die Eisbehandlung geeignet sind.

## Claims

1. A method for producing an acoustic treatment panel, **characterized in that** it comprises the following steps:
- assembling two plates (54, 102, 102'), at least one of which is deformed so as to separate the plates locally in order to form cavities of a cellular structure between the two plates, said cavities being delimited by facets (48) and partitions formed by at least one of the deformed plates,
- producing at least one opening (62) on the facets (48) of one of the two plates (54, 102, 102'), and
- pressing the acoustically resistive plate (64) against the surface of the cellular structure (40) including the openings (62).

2. The method for producing an acoustic treatment panel according to claim 1, **characterized in that** it consists of deforming the plate in contact with the acoustically resistive layer (64) so as to form grooves (68) with a flared shape to delimit channels (66) with said acoustically resistive layer (64) that are capable of channeling hot air for frost treatment.

3. The method for producing an acoustic treatment panel according to claim 1 or 2, **characterized in that** it comprises the following steps:
- forming two plates (54) so as to form two cellular half-structures (44, 44') each with a set of co-planar facets (48) separated by a grid of grooves (50), the two cellular half-structures (44, 44') having identical grids of grooves (50), and
- assembling the two cellular half-structures by pressing the ends of the grooves of the two half-structures (44, 44') against each other.

4. The method for producing an acoustic treatment panel according to claim 1 or 2, **characterized in that** it consists of assembling two plates following a grid of junction lines, then deforming the two plates between two dies by injecting a pressurized fluid between the two plates.

5. The method for producing an acoustic treatment panel according to claim 3 or 4, **characterized in that** the plates (54) are formed by superplastic forming using a die (56) with a grid of grooves.

6. The method for producing an acoustic treatment panel according to claim 3 or 4, **characterized in that** the plates are assembled by diffusion welding.

7. The method for producing an acoustic treatment panel according to any one of the preceding claims, **characterized in that** it consists of inserting, between the cellular structure (40) and the acoustically resistive structure (64), a plate (76) with furrows (78) so as to delimit, once pressed against the acoustically resistive layer (64), channels (66) capable of channeling hot air for frost treatment.

8. The method for producing an acoustic treatment panel according to any one of the preceding claims, **characterized in that** the two deformed plates are assembled at a junction plane that corresponds to the median plane of said cellular structure.

9. An acoustic treatment panel obtained using the method according to any one of the preceding claims, **characterized in that** it comprises a cellular structure including two plates (54, 102, 102'), at least one of which is deformed such that said plates are locally separated in order to form cavities between the two plates, said cavities being delimited by facets (48) and partitions produced by at least one of the deformed plates, the facets of one of the two plates comprising at least one opening (62), and an acoustically resistive layer (64) pressed against the surface of the cellular structure (40) with the openings (62).

10. The acoustic treatment panel according to claim 9, **characterized in that** the junction plane (46) of the two plates is a median plane.

11. The acoustic treatment panel according to claim 9 or 10, **characterized in that** it comprises channels (66) for channeling hot air for frost treatment.

12. The acoustic treatment panel according to claim 11, **characterized in that** certain grooves (68) of the plate that is deformed in contact with the acoustically resistive layer (64) have a flared shape to delimit channels (66) with said acoustically resistive layer capable of channeling hot air for frost treatment.

13. The acoustic treatment panel according to any one of claims 9 to 11, **characterized in that** it comprises, inserted between the cellular structure (40) and the acoustically resistive structure (64), a plate (76) with furrows (78) so as to delimit, once pressed against the acoustically resistive plate (64), channels (66) capable of channeling hot air for frost treatment.
